# EUROPÄISCHE PATENTSCHRIFT

(11) **EP 1 407 621 B1**
(45) Veröffentlichungstag und Bekanntmachung des Hinweises auf die Patenterteilung: **17.08.2005**
(21) Anmeldenummer: 02735083.4
(22) Anmeldetag: 27.05.2002
(51) Int. Cl.: H04Q 3/00

(54) **VORRICHTUNG ZUM ÜBERTRAGEN VON ZEICHENGABEMELDUNGEN**
DEVICE FOR TRANSMITTING SIGNALING MESSAGES
DISPOSITIF DE TRANSMISSION DE MESSAGES DE SIGNALISATION

(30) Priorität: 13.07.2001 DE 10134096
(43) Veröffentlichungstag der Anmeldung: 14.04.2004
(73) Patentinhaber: SIEMENS AKTIENGESELLSCHAFT, 80333 München (DE)
(72) Erfinder: SERROYEN, Gert, B-2627 Schelle (BE); VERWIMP, Gery, 2140 Borgerhout (BE)
(86) Internationale Anmeldenummer: PCT/DE2002/001946
(87) Internationale Veröffentlichungsnummer: WO 2003/007627

(56) Entgegenhaltungen:
- WO-A-00/19739
- WO-A-00/76134
- US-A- 5 706 286

## Beschreibung

Die vorliegende Erfindung betrifft eine Übertragungsvorrichtung zum Übertragen von Zeichengabemeldungen eines Zeichengabesystems.

Unter Zeichengabe versteht man den Austausch von Zeichengabemeldungen (auch Signalisiermeldungen genannt) z. B. zwischen Datenbanken, Vermittlungsknoten und Endgeräten in einem Telekommunikationsnetz. Ein Protokoll für die Zeichengabe wird beispielsweise von dem Zeichengabesystem Nr. 7 zur Verfügung gestellt.

Zeichengabemeldungen werden z. B. für den Aufbau, das Halten und das Auslösen einer Telefonverbindung, das Übertragen von Rufnummern, Anrufer- und Gebühreninformationen, das Übertragen von Routing-Informationen für 0130-, 0180-, 0190-Rufnummern, erweiterte Funktionen wie Rufnummernumleitung und Konferenzschaltung und den Austausch von Informationen zwischen Netzbetreibern z. B. über den Aufenthaltsort eines Mobilfunkteilnehmers, usw. benötigt.

Das Zeichengabenetz ist oft dem Nutzdatennetz überlagert, d. h. für die physikalische Übertragung der Zeichengabemeldungen werden die Übertragungswege des Nutzkanales z. B. im TDM (Time Division Multiplex)-Verfahren mitbenutzt, auf den höheren Schichten jedoch sind die Netze völlig getrennt.

Das Zeichengabenetz beinhaltet Signalisierpunkte (Signaling Points, SP), wobei zwischen Signalisierendpunkten (Signaling End Points) und Signalisiertransferpunkten (Signaling Transfer Points) unterschieden wird, und den Übertragungswegen zwischen den Signalisierpunkten.

Bei den Signalisierendpunkten wird u. a. zwischen Service Switching Points (SSP) und Service Control Points (SCP) unterschieden. Ein Service Switching Point sendet beispielsweise Zeichengabemeldungen zu einem anderen Service Switching Point, die zum Aufbau, Halten oder Trennen einer Telefonverbindung benötigt werden. Ein Service Switching Point kann auch eine Anfrage zu einer Datenbank eines Service Control Points senden, um z. B. die Routing-Informationen einer Service-Rufnummer (z. B. 0130- oder 0800-) zu bestimmen.

Die Verbindung zwischen einzelnen Signalisierpunkten erfolgt über Übertragungsabschnitte, sogenannte Links. In der Regel sind dabei die einzelnen Signalisierpunkte über mehrere Übertragungsabschnitte miteinander verbunden.

Die Protokollstruktur des Zeichengabesystems Nr. 7 besteht im Wesentlichen aus dem Nachrichtentransportteil, dem sogenannten Message Transfer Part (MTP) und den Benutzerteilen, den sogenannten User Parts (UP), wobei der Message Transfer Part das Transportsystem für die Daten der Benutzerteile bildet.

Benutzerteile für verschiedene Anwendungen sind z.B. der ISUP (ISDN User Part) und der Transaction Capabilities Application Part (TCAP).

Der in der Protokollstruktur definierte sogenannte Signaling Connection Control Part (SCCP) erweitert den Message Transfer Part um zusätzliche Funktionen; typischerweise unterstützt er den Transaction Capabilities Application Part (TCAP).

Dabei wird der SCCP im öffentlichen Fernsprechnetz (Public Switched Telephone Network) und Mobilfunknetz (Public Land Mobile Telephone Network, PLMN) zum Transportieren von Zeichengabemeldungen von einer Quelle zu einem Ziel verwendet, die keiner Verbindung zugeordnet sind, wie z. B. Datenbankzugriff in einem intelligenten Netzwerk, Rückruf bei Besetzt, mobiles Roaming und Übergabe (Handover), usw.

Das SCCP-Protokoll ist ein Protokoll des Zeichengabesystems Nr. 7, welches von der International Telecommunication Union (ITU) in den Empfehlungen Q.711 bis Q.714 standardisiert ist und einen Teil der Aufgaben von Schicht 3 des OSI-Modells (Open Systems Interconnection) ausführt; das SCCP-Protokoll bestimmt die Wegelenkung von Nachrichten von einer Quelle zu einem Ziel.

Für Zeichengabemeldungen, die keiner Verbindung zugeordnet sind, verwenden die Anwender (Benutzerteile) des SCCP zur Identifizierung des Ziels eine allgemeine Adresse, die global gültig ist, den sog. Global Title. Diese Global Title-Adresse ist eine eindeutige Adresse innerhalb des Übertragungsnetzwerks und besteht in der Regel aus einer Kombination von Ziffern (z. B. eine gewählte 0130-Nummer oder eine Identifikationsnummer eines Mobilfunkteilnehmers).

Die allgemeine Adresse (Global Title) wird vom jeweiligen Transferknoten (STP) verwendet, um die jeweils weitere Wegelenkung (Routing) zum nächsten Signalisierknoten (Endknoten oder Transferknoten) zur Übersetzung zu bestimmen. Die allgemeine Adresse wird von einen sog. Global Title Translator (im weiteren Verarbeitungseinrichtung genannt) z.B. verwendet, um ein Ziel (z.B. einen weiteren Transferknoten oder einen Endknoten) zu bestimmen.

Beim Stand der Technik führt die jeweilige Verarbeitungseinrichtung, die die jeweilige Zeichengabemeldung weiterverarbeitet, die Verarbeitung von Zeichengabemeldungen in Abhängigkeit von Zielinformationen durch.

So erfolgt die Wegelenkung z. B. statisch, d. h. unter Versendung von Routing-Tabellen, in denen die jeweiligen Zielinformationen enthalten sind und die sich selten ändern. Weiterhin kann die Wegelenkung in Abhängigkeit von der Auslastung der jeweiligen Übertragungswege erfolgen. In diesem Fall wird für jede logische Verbindung oder auch für jede einzelne Zeichengabemeldung eine Wegelenkung durchgeführt, die in Abhängigkeit von der Auslastung der Übertragungswege erfolgt.

Da über das beschriebene Zeichengabenetz auch die Zeichengabe zur Steuerung von Nutzkanälen (z. B. Telefonverbindungen) erfolgt, werden an das Zeichengabenetz hohe Anforderungen in Bezug auf die Dienstgüte (sog. Quality of Service, QoS), z. B. bezüglich der Sicherheit und der Echtzeitübertragung, gestellt.

Jedoch ist für Zeichengabemeldungen diese hohe Dienstgüte oft nicht erforderlich. Insbesondere, wenn es sich um Zeichengabemeldungen handelt, die keiner Verbindung zugeordnet sind. Ein Beispiel für solche Meldungen sind Zeichengabemeldungen, die SMS-Verkehr (Short Message Service) betreffen.

Zeichengabemeldungen, die SMS-Verkehr betreffen, werden durch den sogenannten Mobile Application Part (MAP) des Zeichengabesystems Nr. 7 übertragen. Der MAP ist ein Anwendungsteil (Benutzerteil) des Zeichengabesystems Nr. 7 für die Signalisierung (Zeichengabe) in Mobilfunksystemen.

Die Wegelenkung für Zeichengabemeldungen nach dem Stand der Technik hat jedoch den Nachteil, dass alle Zeichengabemeldungen über das Zeichengabenetz mit hoher Dienstgüte übertragen werden. Somit müssen für alle Arten von Zeichengabemeldungen teure Ressourcen bereit gestellt werden, selbst wenn der jeweilige Nachrichtentyp keine hohe Dienstgüte erfordert.

Außerdem sind mit der Global Title Translation weitere Merkmale verknüpft, wie z.B. die Vergebührung der jeweiligen Zeichengabemeldung und die Unterstützung von sog. Ported Numbers, d.h. von Rufnummern von Teilnehmern, bei denen sich z.B. der Wohnsitz geändert hat und die Rufnummer beibehalten wurde. Die Vergebührung erfolgt dabei in Abhängigkeit von der verwendeten Verarbeitungseinrichtung, d.h. von dem für die jeweilige Zeichengabemeldung verwendeten Global Title Translator.

Da jedoch, wie bereits beschrieben, die Verarbeitungseinrichtung in Abhängigkeit von Zielinformationen ausgewählt wird, ist es für Netzbetreiber schwierig, verschiedene Tarife zur Vergebührung von unterschiedlichen Zeichengabemeldungen festzulegen.

Ein anderes Beispiel ist aus WO 00/76134 bekannt.

Die Aufgabe der vorliegenden Erfindung ist somit, eine Übertragungsvorrichtung zum Übertragen von Zeichengabemeldungen eines Zeichengabesystems Verfahren bereitzustellen, die eine flexible Verarbeitung und Übertragung von Zeichengabemeldungen ermöglicht.

Diese Aufgabe wird durch eine Übertragungsvorrichtung zum Übertragen von Zeichengabemeldungen eines Zeichengabesystems gemäß dem beigefügten Anspruch 1 gelöst.

Die Übertragungsvorrichtung zum Übertragen von Zeichengabemeldungen eines Zeichengabesystems gemäß der vorliegenden Erfindung enthält eine Empfangsschnittstelle zum Empfangen von Zeichengabemeldungen, eine Vielzahl von Verarbeitungseinrichtungen zum Verarbeiten der empfangenen Zeichengabemeldungen, und eine Entscheidungseinrichtung, die in Abhängigkeit von in den jeweiligen Zeichengabemeldungen enthaltenen Ursprungs- und/oder Anwenderinformationen (d.h. von Informationen des Anwenderteils) eine Verarbeitungseinrichtung zum weiteren Verarbeiten der jeweiligen Zeichengabemeldung auswählt.

Der Vorteil der vorliegenden Erfindung besteht darin, daß eine flexible Wegelenkung der jeweiligen Zeichengabenachricht erfolgen kann, die z.B. an die Erfordernisse dieser Zeichengabenachricht angepaßt ist. Weiterhin läßt sich die Vergebührung flexibler gestalten, z.B. in Abhängigkeit vom jeweiligen Netzbetreiber, Anwender (Benutzerteil), Nachrichtentyp, usw.

Ein weiterer Vorteil der vorliegenden Erfindung besteht darin, daß aufgrund des Ursprungs der Zeichengabemeldungen, Nummern als portiert oder nicht portiert erkannt werden können.

Vorteilhafte Ausgestaltungen der vorliegenden Erfindung sind in den jeweiligen Unteransprüchen wiedergegeben.

Die Entscheidungseinrichtung kann die jeweilige Verarbeitungseinrichtung beispielsweise aufgrund der Quelladresse der jeweiligen Zeichengabemeldung auswählen. In der Protokollstruktur (Protokollstack) des Zeichengabesystems Nr. 7 wird diese Quelladresse als Origination Point Code (OPC) und/oder Calling Party Address (Subsystem Nummer SSN, Global Title GT) bezeichnet.

Weiterhin kann die Entscheidungseinrichtung die jeweilige Verarbeitungseinrichtung aufgrund des Anwenders auswählen; so daß z.B. für MAP und INAP (Intelligent Network Application Part)-Nachrichten unterschiedliche Verarbeitungseinrichtungen ausgewählt werden, auch wenn beide Nachrichten das gleiche Ziel haben.

Ein weiteres Entscheidungskriterium kann auch der jeweilige Nachrichtentyp sein. So können Zeichengabemeldungen, die beispielsweise SMS-Datenverkehr betreffen, der als MAP-Zeichengabenachricht übertragen wird, anders verarbeitet werden als andere MAP-Zeichengabemeldungen.

Die Verarbeitungseinrichtungen können sich beispielsweise darin unterscheiden, wie sie die Verarbeitung hinsichtlich der Wegelenkung von Zeichengabemeldungen durchführen.

Die Wegelenkung von Zeichengabemeldungen kann dabei beispielsweise abhängig vom jeweiligen Netzbetreiber in einer Weise erfolgen, bei der beispielsweise unterschiedliche Transferpunkte, Netze unterschiedlicher Netzbetreiber, usw. zur Übertragung benutz werden.

Eine weitere Möglichkeit der Wegelenkung von Zeichengabemeldungen besteht darin, die Zeichengabemeldungen abhängig von ihren Ursprungs- bzw. Anwenderinformationen über unterschiedliche Datenübertragungsnetze zu übertragen.

So können sich die Verarbeitungseinrichtungen darin unterscheiden, daß sie die Verarbeitung hinsichtlich der Übertragung über ein erstes oder ein zweites Datenübertragungsnetz durchführen.

Das erste Datenübertragungsnetz kann dabei ein Zeichengabenetz mit hoher Dienstgüte und das zweite Datenübertragungsnetz ein IP-basiertes Datenübertragungsnetz (z.B. Internet) mit einer niedrigeren Dienstgüte sein.

Somit ermöglicht die vorliegende Erfindung die Auswahl eines Datenübertragungsnetzes in Abhängigkeit von dem Inhalt der zu übertragenden Zeichengabemeldung. Zeichengabemeldungen, an die keine hohen Anforderungen an die Dienstgüte der Datenübertragung gestellt werden, können über ein entsprechendes Datenübertragungsnetz (zweites Datenübertragungsnetz, z.B. Internet) übertragen werden. Die Anforderungen an die Dienstgüte lassen sich bei vielen Zeichengabemeldungen aus ihrem Inhalt ableiten. Somit müssen für Zeichengabemeldungen mit einem bestimmten Inhalt keine teuren Ressourcen mit einer hohen Dienstgüte bereitgestellt werden.

Ein Beispiel für Zeichengabemeldungen, die eine geringere Anforderung an das Datenübertragungsnetz hinsichtlich der Dienstgüte stellen, sind Zeichengabemeldungen, deren Nachrichtentyp SMS-Datenübertragungen betreffen. Für diese Zeichengabemeldungen wählt die Entscheidungseinrichtung eine Verarbeitungseinrichtung aus, die Zeichengabemeldungen über das zweite Datenübertragungsnetz überträgt.

Die jeweiligen können sich weiterhin darin unterscheiden, wie sie Verarbeitung hinsichtlich der Vergebührung (Gebührenerfassung) von Zeichengabemeldungen durchführen, so daß z.B. Zeichengabemeldungen unterschiedlicher Netzbetreiber, Anwender, etc. unterschiedlich vergebührt werden können.

Die vorliegende Erfindung wird nachfolgend anhand eines bevorzugten Ausführungsbeispiels unter Bezug auf die beigefügten Zeichnungen näher erläutert, in denen zeigen
Fig. 1 eine schematische Darstellung der erfindungsgemäßen Übertragungsvorrichtung,
Fig. 2 ein Ablaufdiagramm der Entscheidung über die Auswahl der jeweiligen Verarbeitungseinrichtung,
Fig. 3 ein Anwendungsbeispiel der vorliegenden Erfindung,
Fig. 4a und 4b ein weiteres Anwendungsbeispiel der vorliegenden Erfindung, und
Figs. 5 bis 8 weitere Anwendungsbeispiele für die vorliegende Erfindung.

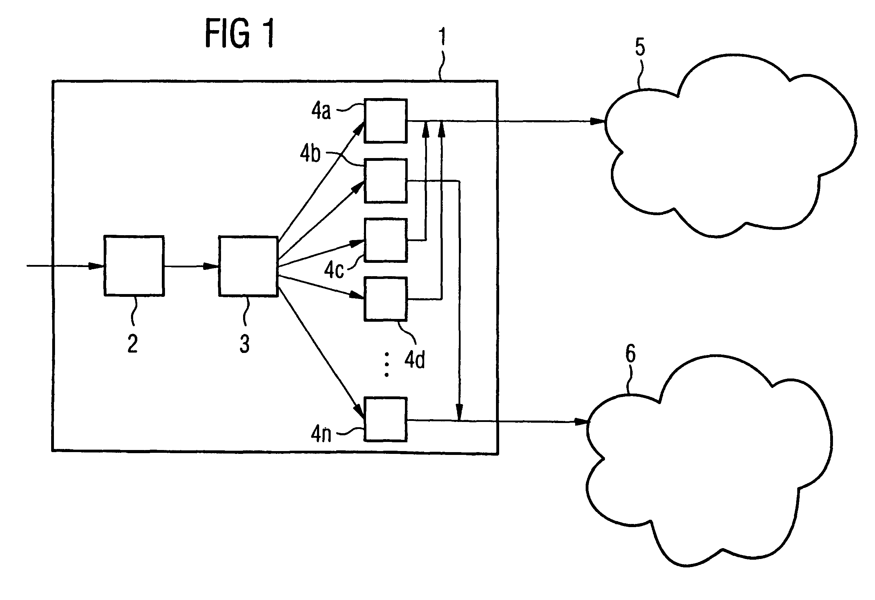

Wie in Fig. 1 zu sehen ist, enthält die erfindungsgemäße Übertragungsvorrichtung 1 eine Empfangsschnittstelle 2 zum Empfangen von Zeichengabemeldungen, mehrere Verarbeitungseinrichtungen 4a...4n zum Verarbeiten der empfangenen Zeichengabemeldungen, und eine Entscheidungseinrichtung 3, die gemäß der vorliegenden Erfindung in Abhängigkeit von in den jeweiligen Zeichengabemeldungen enthaltenen Ursprungs- und/oder Anwenderinformationen eine Verarbeitungseinrichtung 4a...4n zum weiteren Verarbeiten der entsprechenden Zeichengabemeldung auswählt.

So werden in einem Ausführungsbeispiel der vorliegenden Erfindung SMS-Zeichengabemeldungen, die auf den MAP (Mobile Application Part)-Anwender bezogen sind, über ein (relativ billiges) IP-Datenübertragungsnetz (zweites Datenübertragungsnetz 6) zum Ziel übertragen; das (teure) TDM-Zeichengabenetz (erstes Datenübertragungsnetz 5) wird somit vom SMS-bezogenen MAP-Zeichengabeverkehr entlastet. Auf diese Weise werden weitere Kapazitäten frei, die die jeweiligen Netzbetreiber für weiteren Zeichengabeverkehr zur Verfügung stellen können.

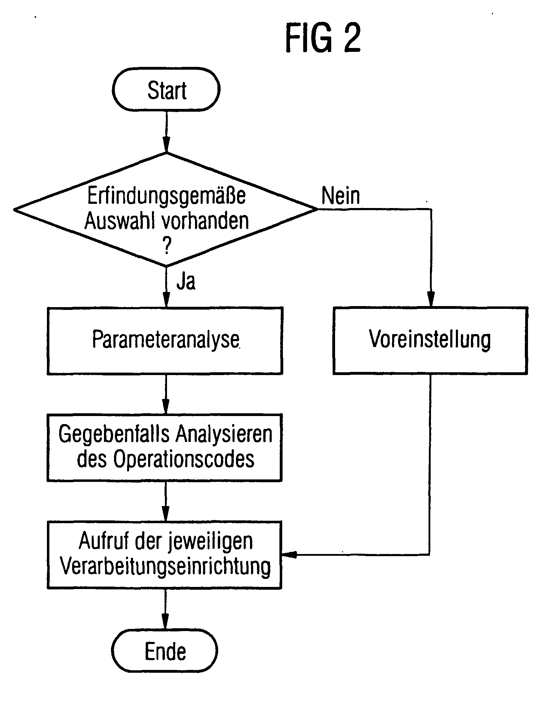

Fig. 2 zeigt ein Ablaufdiagramm zur erfindungsgemäßen Auswahl der jeweiligen Verarbeitungseinrichtung.

Wenn eine Auswahl einer Verarbeitungseinrichtung gemäß der vorliegenden Erfindung möglich ist, dann erfolgt zunächst durch die erfindungsgemäße Entscheidungseinrichtung eine Parameteranalyse bestimmter Parameter der jeweiligen empfangenen Zeichengabemeldung. Ist diese Auswahlmöglichkeit nicht gegeben, dann erfolgt die Verarbeitung durch eine Verarbeitungseinrichtung, d.h. die Auswahl des jeweiligen Global Title Translators, voreingestellt nach dem Stand der Technik.

Die erfindungsgemäße Entscheidungseinrichtung analysiert zur Auswahl der jeweiligen Entscheidungseinrichtung die Parameter der jeweiligen empfangenen Zeichengabemeldung. Die Parameteranalyse kann dabei beispielsweise nach folgenden Kriterien durchgeführt werden:
- Ermitteln der Quelladresse (Originating Point Code), die im sog. Routing Label von Zeichengabemeldungen enthalten ist,
- Ermitteln der Quelle des SCCP-Zeichengabeverkehrs, d.h. Zeichengabeverkehr, der von einem bestimmten SCCP-Knoten kommt, wird entsprechend, z.B. anhand von Listeneinträgen, verarbeitet,
- Ermitteln der Netzwerknummer (Network Number) vom Message Transfer Part, d.h. Zeichengabeverkehr, der von bestimmten Links empfangen wird, wird entsprechend, z.B. anhand von Listeneinträgen, verarbeitet,
- Subservice Nummer und allgemeine Adresse (Global Title) des aufrufenden Anwenders des SCCP, die Verarbeitung erfolgt ebenfalls entsprechend von Listeneinträgen.

Um eine Übertragung von Zeichengabemeldungen eines bestimmten Nachrichtentyps (z.B. SMS-Zeichengabemeldungen) über ein erstes oder ein zweites Datenübertragungsnetz durchführen zu können, muß von der Entscheidungseinrichtung 3 vor der SCCP-Global Title Translation zusätzlich die MAP/TCAP-Zeichengabemeldung decodiert werden (Analysieren des Operationscodes); die jeweiligen Operationscodes gehen aus den Standards EN 300 599 und 3G TS 29.002 der ETSI hervor.

Der jeweilige Global Title Translator (gtTranslator, Verarbeitungseinrichtung), der zur Übersetzung des Global Titles in einen Zielcode herangezogen wird, hängt dann von dem jeweiligen Nachrichtentyp davon ab. Als Folge davon wird eine abgehende Route für den jeweiligen Zeichengabeverkehr gewählt. So werden z. B. SMS-Zeichengabemeldungen über einen IP-Übertragungsweg (zweites Datenübertragungsnetz 6) übertragen.

Unter dem Begriff "Auswahl einer Verarbeitungseinrichtung" wird verstanden, daß jeweils eine Objektinstanz eines gtTranslators mit entsprechenden, d.h. durch die Entscheidungseinrichtung nach der Parameteranalyse bestimmten, Parametern gebildet wird. Mit anderen Worten, die Parameter, mit denen der jeweilige Global Title Translator und die dazugehörigen Regeln (z.B. ein entsprechender Datenbankzugriff) aufgerufen werden, wird von der Entscheidungseinrichtung aufgrund von Ursprungs- bzw. Anwenderinformationen festgelegt.

Dazu wird nach Empfangen einer Zeichengabemeldung ("Start") wird die sog. Subsystemnummer des SCCP-Protokolls der jeweiligen Zeichengabemeldung ermittelt. Wird die Subsystemnummer nicht vom MAP benutzt, dann erfolgt die gtTranslation für "nicht-SMS"-bezogene Nachrichten, z.B. nach einem der anderen o.g. Kriterien.

Wird jedoch die Subsystemnummer vom MAP benutzt, dann wird der MAP-Code decodiert. Aus dieser Decodierung geht hervor, ob der MAP eine SMS-bezogene Nachricht enthält. Enthält der MAP keine SMS-bezogene Nachricht, erfolgt die gtTranslation ebenfalls für nicht-SMS-bezogene Nachrichten.

Wird keine Übereinstimmung mit o.g. Parametern gefunden, so erfolgt die Auswahl der jeweiligen Verarbeitungseinrichtung ebenfalls nach einem voreingestellten (default) Wert.

Um eine erfindungsgemäße Verarbeitung der Zeichnegabemeldungen gemäß der vorliegenden Erfindung zu erreichen, wird vorteilhafterweise die sogenannte Global Title Translation-Funktion, wie sie in den Standards Q.711 bis Q.714, Q.751.2 der ITU und EN 300 009-1, T1.112.1.5, ETS 300 599 und 3G TS 29.002 der ETSI definiert sind, verwendet.

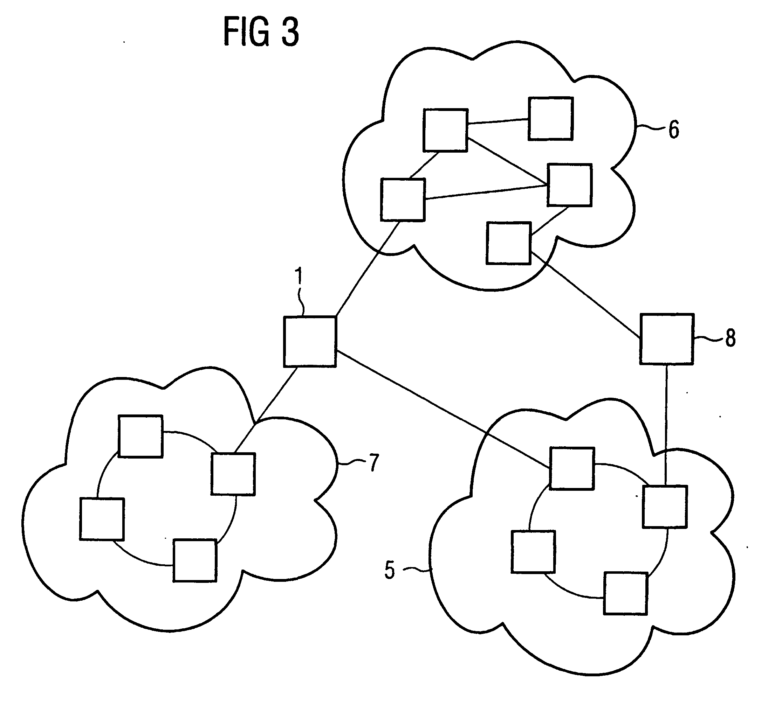

Fig. 3 zeigt ein Anwendungsbeispiel der vorliegenden Erfindung.

Ebenso wie in Fig. 1, wird mit dem Bezugszeichen 5 das erste Datenübertragungsnetz, mit dem Bezugszeichen 6 das zweite Datenübertragungsnetz und mit dem Bezugszeichen 1 die erfindungsgemäße Übertragungsvorrichtung bezeichnet. Zusätzlich ist in dieser Fig. ein Mobilfunknetz 7 und eine Vermittlungsstelle 8 eingezeichnet. Jedes der gezeigten Datenübertragungsnetze enthält mehrere Vermittlungsknoten, Transferknoten, etc. zum Übertragen und weiterleiten von Daten wie Nutzdaten und Zeichengabemeldungen.

Wird nun in dem Mobilfunknetz 7 eine Zeichengabemeldung generiert, so wird sie nach dem Stand der Technik über das Zeichengabenetz zum jeweiligen Ziel übertragen. Gemäß dieses Ausführungsbeispiels der vorliegenden Erfindung jedoch wird die jeweilige Zeichengabemeldung in Abhängigkeit von ihrem Inhalt entweder über das Zeichengabenetz (erstes Datenübertragungsnetz 5) oder das Internet (zweites Datenübertragungsnetz 6) übertragen.

Zu diesem Zweck findet in der Übertragungsvorrichtung 1, die beispielsweise in einem Signalisiertransferpunkt realisiert wird, eine Überprüfung durch die erfindungsgemäße Entscheidungseinrichtung statt.

Handelt es sich bei der jeweiligen Zeichengabemeldung beispielsweise um eine Zeichengabemeldung, die SMS-bezogen ist, so wird sie erfindungsgemäß über das zweite Datenübertragungsnetz übertragen. Handelt es sich um eine Zeichengabemeldung, die nicht auf eine SMS bezogen ist, so wird sie über das herkömmliche Zeichengabenetz übertragen.

Die Zeichengabemeldungen, die über das zweite Datenübertragungsnetz 6 übertragen wurden, werden von der Vermittlungsstelle 8 wieder in das Zeichengabenetz (erstes Datenübertragungsnetz 5) in der Nähe des Ziels wieder eingespeist.

Es wird darauf hingewiesen, daß die Unterscheidung zwischen "SMS-bezogenen" und "nicht SMS-bezogenen" Zeichengabemeldungen lediglich als Beispiel dient. Gemäß der vorliegenden Erfindung können jegliche Zeichengabemeldungen, die zur Übertragung keine hohe Dienstgüte erfordern, über das zweite Datenübertragungsnetz übertragen werden.

Dazu muss eine spezielle Datenbank für den Global Title Translator für SMS-Zeichgabeverkehr angelegt werden, was durch die Markierung einer gtTranslator- Objektinstanz durch ein zusätzliches Flag "reserviert für SMS" realisiert wird.

Somit werden auch automatisch alle zu den "reserviert für SMS" gtTranslator zugehörigen gtRoute reserviert.

Die vorliegende Erfindung hat den Vorteil, daß das Zeichengabenetz (erstes Datenübertragungsnetz 5) vom Zeichengabeverkehr entlastet wird, der keine hohe Dienstgüte erfordert. Somit ist das Zeichengabenetz in der Lage, weiteren Zeichengabeverkehr zu übertragen.

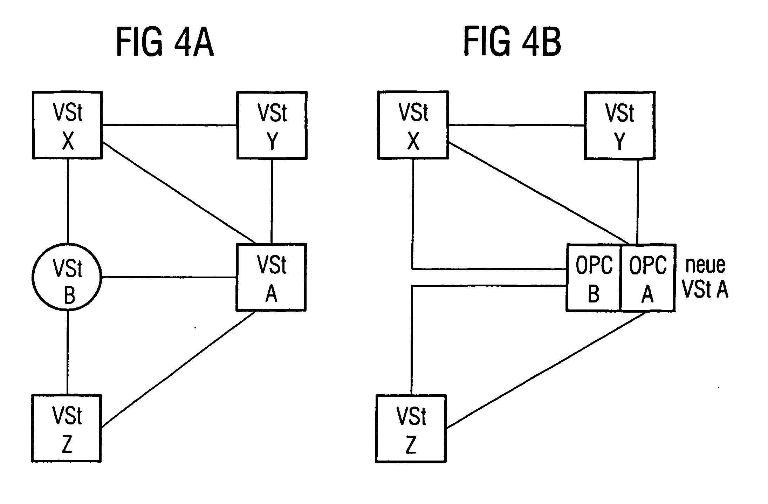

Figuren 4a und 4b verdeutlichen ein weiteres Anwendungsbeispiel der vorliegenden Erfindung, wobei Fig. 4a die Verarbeitung von Zeichengabemeldungen nach dem Stand der Technik und Fig. 4b die Verarbeitung von Zeichengabemeldungen gemäß der vorliegenden Erfindung verdeutlicht.

In diesem Beispiel wird gezeigt, wie mit Hilfe der vorliegenden Erfindung Vermittlungsstellen vereinigt werden können.

Im Beispiel von Figur 4a (Stand der Technik) können Zeichengabemeldungen, die von einer der angrenzenden Vermittlungsstellen X oder Y (VSt X, VSt Y) versendet werden, in Abhängigkeit von ihren Ziel entweder über die Vermittlungsstelle B (VSt B) oder die Vermittlungsstelle A übertragen werden; die Datenbank, die zur Global Title Translation herangezogen wird, ist beim Stand der Technik netzwerkunabhängig.

Mit Hilfe der vorliegenden Erfindung können, wie in Fig. 4B gezeigt wird, die Vermittlungsstellen A und B in einer neuen Vermittlungsstelle A (neue VSt A) vereinigt werden. Somit kann die ursprüngliche Vermittlungsstelle B (VSt B) wegfallen.

Durch die erfindungsgemäße Auswahl der jeweiligen Verarbeitungseinrichtung in Abhängigkeit der jeweiligen Zeichengabemeldungen enthaltenen Ursprungs- und/oder Anwenderinformationen läßt sich in der neuen Vermittlungsstelle A (neue VSt A) ermitteln, ob die jeweilige Zeichengabemeldung für die ursprüngliche Vermittlungsstelle B oder die ursprüngliche Vermittlungsstelle A bestimmt ist und durch die Auswahl der jeweiligen Verarbeitungseinrichtung entsprechend weiterverarbeiten. Für die angrenzenden Vermittlungsstellen X und Z sind die beiden Vermittlungsstellen A und B scheinbar weiter vorhanden.

Um Überschneidungen bei der Global Title Translation zu vermeiden, greifen die unterschiedlichen Verarbeitungseinrichtungen vorteilhafterweise auf jeweils unterschiedliche Datenbanken zu.

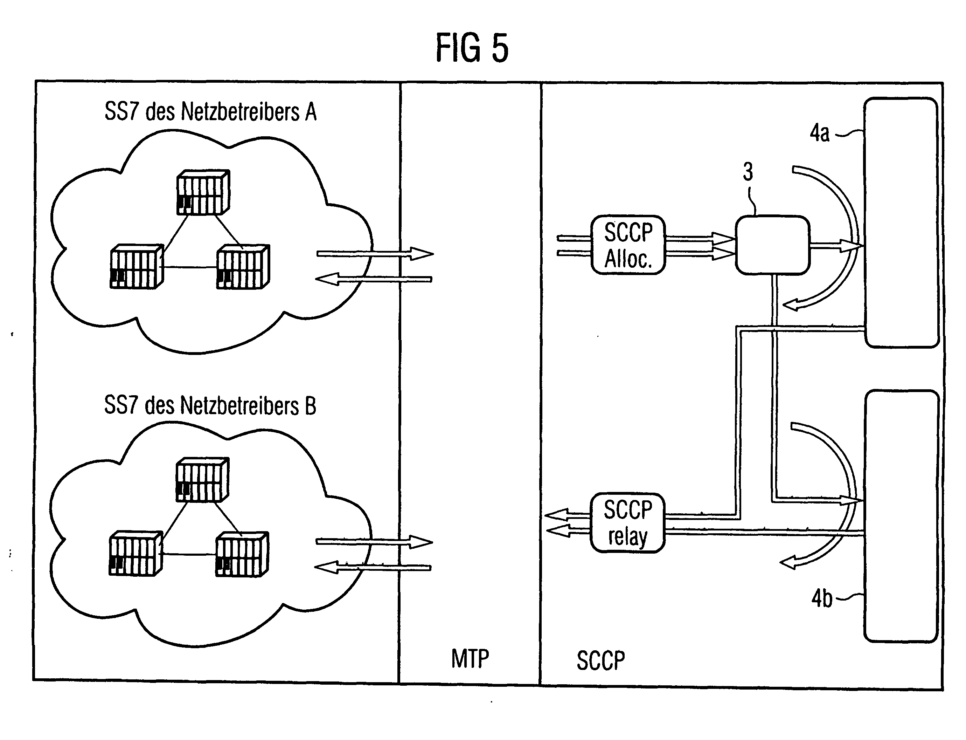

Unter Bezug auf die Figuren 5 bis 8 wird die vorliegende Erfindung nachfolgend anhand von weiteren Beispielen verdeutlicht.

Fig. 5 zeigt die Verarbeitung von Zeichengabemeldungen von unterschiedlichen Netzbetreibern, d.h. aus dem Zeichengabenetz des Netzbetreibers A oder B.

Aus den durch den Message Transfer Part (MTP) transportierten Zeichengabemeldungen werden die Informationen des SCCP herausgelesen ("SCCP Allocation"). Daraufhin erfolgt durch die erfindunggemäße Entscheidungseinrichtung eine Parameteranalyse z.B. hinsichtlich Nachrichtentyp, Anwender, Netzbetreiber, SMS-Datenverkehr, usw. Nach dieser Parameteranalyse wird die jeweilige Verarbeitungseinrichtung 4a oder 4b zur weiteren Verarbeitung ausgewählt. Konkret bedeutet das, daß zur weiteren Verarbeitung der jeweiligen Zeichengabemeldung eine Objektinstanz des Global Title Translator gebildet wird, wobei die Bildung in Abhängigkeit von dem Ergebnis der Parameteranalyse erfolgt. Die jeweiligen Objektinstanzen unterscheiden sich dabei z.B. hinsichtlich der angewendeten Regeln für die Global Title Translation (global Title Rules) oder der Datenbank, auf die für die Global Title Translation zugegriffen wird.

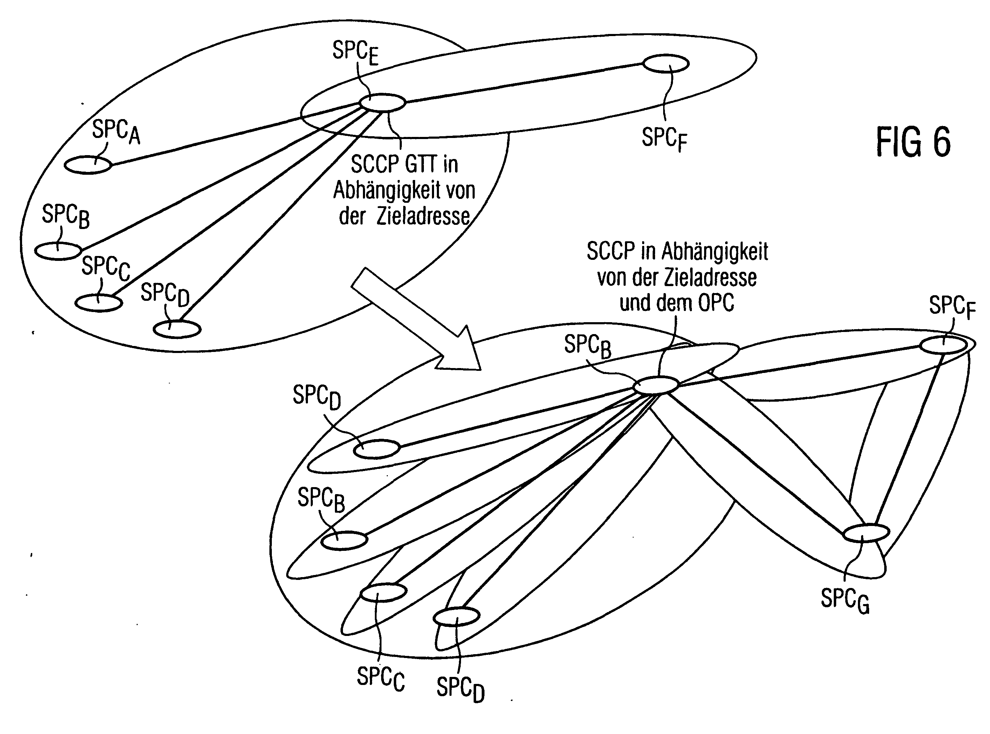

Fig. 6 zeigt eine Gegenüberstellung der Global Title Translation nach dem Stand der Technik und gemäß der vorliegenden Erfindung.

Beim Stand der Technik erfolgt die SCCP GTT (Signaling Connection Control Part Global Title Translation) nur in Abhängigkeit von der Zieladresse des Empfängers der jeweiligen Zeichengabemeldung, d.h. in Abhängigkeit von der sog. Called Party Address. Das bedeutet, daß Zeichengabemeldungen, die beispielsweise von dem Signalisierpunkt mit der Adresse SPC_{E} (Signaling Point Code) weitergeleitet werden und ein Ziel haben, dessen Zieladresse im Bereich des Signalisierpunkts mit der Adresse SPC_{F} liegt, über einen festgelegten Weg unabhängig von ihrem Ursprung (SPC_{A} bis SPC_{D}) zum Ziel geleitet werden.

Gemäß der vorliegenden Erfindung kann nun die SCCP GTT zusätzlich zur Called Party Address in Abhängigkeit von der Ursprungsaddresse (sog. Calling Party Address) oder des sog. Origination Point Code (OPC) der jeweiligen Zeichengabemeldung erfolgen. Im gezeigten Beispiel bedeutet das, daß Zeichengabemeldungen, die den Ursprung SPC_{A} haben, vom Signalisierpunkt SPC_{E} direkt zum Ziel SPC_{F} übertragen werden. Dagegen werden Zeichengabemeldungen mit dem Ursprung SPC_{B} bis SPC_{D} von dem Signaliserpunkt SPC_{E} über den Signalisierpunkt SPC_{G} zum Ziel geleitet werden. Das hat z.B. dann Bedeutung, wenn der Übertragungsweg über den Signalisierpunkt SPC_{G} zu einem anderen Netzbetreiber gehört, als der direkte Übertragungsweg.

So können auch Zeichengabemeldungen, die zwar eine Unterschiedliche Ursprungsadresse (Called Party Address), jedoch vom gleichen Signaliserpunkt (nicht gezeigt) an den Signalisierpunkt SPC_{E} weitergeleitet wurden, unterschiedlich behandelt werden.

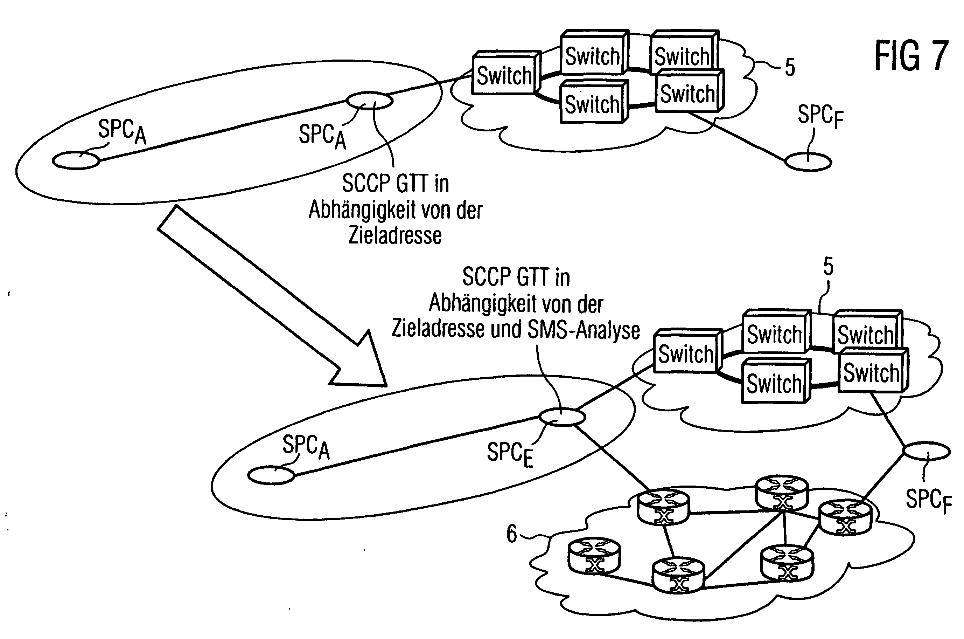

Fig. 7 zeigt eine weitere Gegenüberstellung der Global Title Translation nach dem Stand der Technik und gemäß der vorliegenden Erfindung.

Bei einer SCCP GTT, die nur in Abhängigkeit von der Zieladresse der jeweiligen Zeichengabemeldung erfolgt, können die Zeichengabemeldungen nur über das Zeichengabenetz (erstes Datenübertragungsnetz 5) zum Ziel im Bereich des SPC_{F} übertragen werden.

Dagegen kann bei der SCCP GTT gemäß der vorliegenden Erfindung das Datenübertragungsnetz (erstes Datenübertragungsnetz 5 oder zweites Datenübertragungsnetz 6) ausgewählt werden, über das die jeweilige Zeichengabemeldung übertragen wird. Im gezeigten Beispiel erfolgt somit zusätzlich im Signalisierpunkt SPC_{E} eine Analyse des Nachrichtentyps, z.B. obe es sich um SMS-bezogene Zeichengabemeldungen handelt. Ist dies der Fall, dann erfolgt die Datenübertragung zum Signalisierpunkt SPC_{F} über das zweite Datenübertragungsnetz 6 (z.B. Internet), sonst erfolgt die Datenübertragung über das erste Datenübertragungsnetz 5 (z.B. Zeichengabenetz).

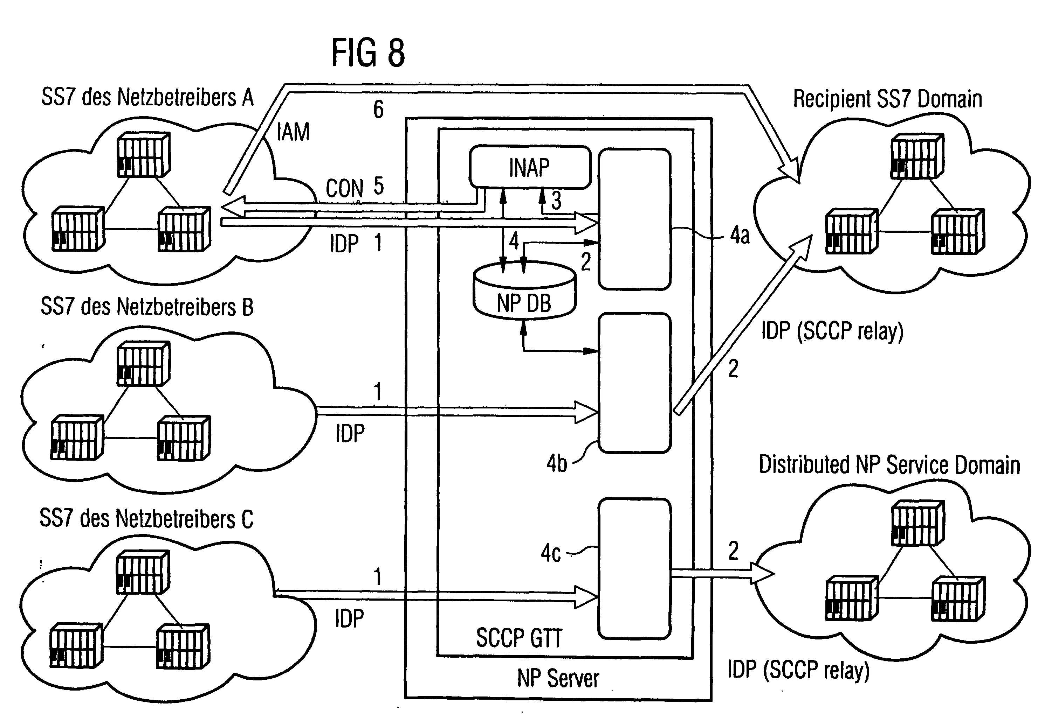

Fig. 8 zeigt Beispiele für die Anwendung der vorliegenden Erfindung bei portierten Rufnummern (sog. Ported Numbers). Dabei kann der Datenbankzugriff für diese portierten Rufnummern in Abhängigkeit vom jeweiligen Netzbetreiber (Netzbetreiber A, B oder C) erfolgen; die Verarbeitung erfolgt dabei durch die jeweilige Verarbeitungseinrichtung 4a, 4b oder 4c.

So erfolgt bei Zeichengabemeldungen, die aus dem Zeichengabenetz (SS7) des Netzbetreibers A stammen und eine Behandlung von portierten Nummern erfordern, eine Anfrage (IDP, Initial Domain Part) aus dem Zeichengabenetz des Betreibers A. Die Verarbeitungseinrichtung 4a greift daraufhin auf die Datenbank (NP DB, Number Portability Database) zu. Eine Rückantwort in das Zeichengabenetz des Netzbetreibers A erfolgt durch den INAP (Intelligent Network Application Part) als Connect Message (CON) zurück zum Zeichengabenetz des Netzbetreibers A. Nach diesem Datenbankzugriff erfolgt eine Übertragung einer Initial Address Message (IAM) direkt zum empfangenden Zeichengabenetz (Recipient SS7 Domain). Diese Prozedur wird auch als "handoff procedure" bezeichnet.

Bei Zeichengabemeldungen aus dem Zeichengabenetz des Netzbetreibers B werden Zeichengabemeldungen nach einem Datenbankzugriff direkt zum empfangenden Zeichengabenetz weitergeleitet.

Zeichengabemeldungen des Netzbetreibers C haben keine Berechtigung für einen Datenbankzugriff und werden zu einem weiteren Server geleitet, der einen Datenbankzugriff ermöglicht (Distributed NP Service Domain).

## Patentansprüche

1. Übertragungsvorrichtung (1) zum Übertragen von Zeichengabemeldungen eines Zeichengabesystems mit einer Empfangsschnittstelle (2) zum Empfangen von Zeichengabemeldungen,
**dadurch gekennzeichnet,**
**dass** die Übertragungsvorrichtung des Weiteren eine Vielzahl von Verarbeitungseinrichtungen (4a...4n) zum Verarbeiten der empfangenen Zeichengabemeldungen umfasst sowie eine Entscheidungseinrichtung (3), die in Abhängigkeit von in den jeweiligen Zeichengabemeldungen enthaltenen Ursprungs- und/oder Anwenderinformationen eine Verarbeitungseinrichtung (4a...4n) zum weiteren Verarbeiten der jeweiligen Zeichengabemeldung auswählt, wobei die Entscheidungseinrichtung (3) für Zeichengabemeldungen, deren Nachrichtentyp SMS-Datenübertragungen betreffen, eine Verarbeitungseinrichtung (4a...4n) auswählt, die Zeichengabemeldungen über ein zweites Datenübertragungsnetz (6) überträgt.

2. Übertragungsvorrichtung (1) gemäß Anspruch 1,
**dadurch gekennzeichnet,**
**dass** die Entscheidungseinrichtung (3) die jeweilige Verarbeitungseinrichtung (4a...4n) aufgrund der Quelladresse der jeweiligen Zeichengabemeldung auswählt.

3. Übertragungsvorrichtung (1) gemäß Anspruch 1 oder 2,
**dadurch gekennzeichnet,**
**dass** die Entscheidungseinrichtung (3) die jeweilige Verarbeitungseinrichtung (4a...4n) aufgrund des Anwenders der jeweiligen Zeichengabemeldung auswählt.

4. Übertragungsvorrichtung (1) gemäß Anspruch 1, 2 oder 3,
**dadurch gekennzeichnet,**
**dass** die Entscheidungseinrichtung (3) die jeweilige Verarbeitungseinrichtung (4a...4n) aufgrund des Nachrichtentyps der jeweiligen Zeichengabemeldung auswählt.

5. Übertragungsvorrichtung (1) gemäß einem der Ansprüche 1 bis 4,
**dadurch gekennzeichnet,**
**dass** die jeweilige Verarbeitungseinrichtung (4a...4n) die Wegelenkung der jeweiligen Zeichengabemeldung durchführt.

6. Übertragungsvorrichtung (1) gemäß Anspruch 5,
**dadurch gekennzeichnet,**
**dass** die Verarbeitungseinrichtungen (4a...4n) die jeweiligen Zeichengabemeldungen über ein erstes oder zweites Datenübertragungsnetz (5 oder 6) übertragen.

7. Übertragungsvorrichtung (1) gemäß Anspruch 6,
**dadurch gekennzeichnet,**
**dass** das erste Datenübertragungsnetz (5) ein Zeichengabenetz ist.

8. Übertragungsvorrichtung (1) gemäß Anspruch 6 oder 7,
**dadurch gekennzeichnet,**
**dass** das zweite Datenübertragungsnetz (6) ein IP-basiertes Datenübertragungsnetz ist.

9. Übertragungsvorrichtung (1) gemäß einem der Ansprüche 1 bis 8,
**dadurch gekennzeichnet,**
**dass** die Vergebührung der jeweiligen Zeichengabemeldung von der ausgewählten Verarbeitungseinrichtung (4a...4n) abhängt.

## Claims

1. Transmission device (1) for transmitting signalling messages of a signalling system, with
a receiving interface (2) for receiving signalling messages,
**characterised in that**,
the transmission device furthermore comprises a plurality of processing devices (4a - 4n) for processing the received signalling messages, and a decision device (3) which selects a processing device (4a - 4n) for further processing of the relevant signalling messages on the basis of the source information and/or user information contained in the signalling messages, whereby the decision device (3) for signalling messages, the message type of which relates to SMS data transmission, selects a processing device (4a...4n) which transmits signalling messages via a second data communications network (6)

2. Transmission device (1) according to claim 1,
**characterised in that**
the decision device (3) selects the relevant processing device (4a - 4n) on the basis of the source address of the relevant signalling message.

3. Transmission device (1) according to claim 1 or 2,
**characterised in that**
the decision device (3) selects the relevant processing device (4a - 4n) on the basis of the user of the relevant signalling message.

4. Transmission device (1) according to claim 1, 2 or 3
**characterised in that**
the decision device (3) selects the relevant processing device (4a - 4n) on the basis of the message type of the relevant signalling message.

5. Transmission device (1) according to one of claims 1 to 4,
**characterised in that**
the relevant processing device (4a - 4n) performs routing of the relevant signalling message.

6. Transmission device (1) according to claim 5,
**characterised in that**
the processing devices (4a - 4n) transfer the relevant signalling messages via a first or second data communications network (5 or 6).

7. Transmission device (1) according to claim 6,
**characterised in that**
the first data communications network (5) is a signalling network.

8. Transmission device (1) according to claim 6 or 7,
**characterised in that**
the second data communications network (6) is an IP-based data communications network.

9. Transmission device (1) according to one of claims 1 to 8,
**characterised in that**
the billing for the relevant signalling messages depends on the processing device (4a - 4n) selected.

## Revendications

1. Dispositif de transmission (1) pour transmettre des messages de signalisation d'un système de signalisation, comprenant une interface réceptrice (2) pour recevoir des messages de signalisation,
**caractérisé en ce**
**que** le dispositif de transmission comprend par ailleurs une pluralité de dispositifs de traitement (4a ... 4n) pour traiter les messages de signalisation reçus ainsi qu'un dispositif de décision (3) qui, en fonction d'informations source e/ou utilisateur, sélectionne un dispositif de traitement (4a ... 4n) pour poursuivre le traitement du message de signalisation respectif, le dispositif de décision (3) sélectionnant, pour des messages de signalisation dont le type concerne des transmissions de données SMS, un dispositif de traitement (4a ... 4n) qui transmet des messages de signalisation par l'intermédiaire d'un deuxième réseau de transmission de données (6).

2. Dispositif de transmission (1) selon la revendication 1,
**caractérisé en ce**
**que** le dispositif de décision (3) sélectionne le dispositif de traitement respectif (4a ... 4n) sur la base de l'adresse source du message de signalisation respectif.

3. Dispositif de transmission (1) selon la revendication 1 ou 2,
**caractérisé en ce**
**que** le dispositif de décision (3) sélectionne le dispositif de traitement respectif (4a ... 4n) sur la base de l'utilisateur du message de signalisation respectif.

4. Dispositif de transmission (1) selon la revendication 1, 2 ou 3,
**caractérisé en ce**
**que** le dispositif de décision (3) sélectionne le dispositif de traitement respectif (4a ... 4n) sur la base du type de message du message de signalisation respectif.

5. Dispositif de transmission (1) selon l'une des revendications 1 à 4,
**caractérisé en ce**
**que** le dispositif de traitement respectif (4a ... 4n) effectue le routage du message de signalisation respectif.

6. Dispositif de transmission (1) selon la revendication 5,
**caractérisé en ce**
**que** les dispositifs de traitement (4a ... 4n) transmettent les messages de signalisation respectifs par l'intermédiaire d'un premier ou d'un deuxième réseau de transmission de données (5 ou 6).

7. Dispositif de transmission (1) selon la revendication 6,
**caractérisé en ce**
**que** le premier réseau de transmission de données (5) est un réseau de signalisation.

8. Dispositif de transmission (1) selon la revendication 6 ou 7,
**caractérisé en ce**
**que** le deuxième réseau de transmission de données (6) est un réseau de transmission de données basé IP.

9. Dispositif de transmission (1) selon l'une des revendications 1 à 8,
**caractérisé en ce**
**que** la facturation du message de signalisation respectif dépend du dispositif de traitement (4a ... 4n) sélectionné.
